# EUROPÄISCHE PATENTSCHRIFT

(11) **EP 0 993 922 B1**
(45) Veröffentlichungstag und Bekanntmachung des Hinweises auf die Patenterteilung: **17.12.2008**
(21) Anmeldenummer: 99120183.1
(22) Anmeldetag: 09.10.1999
(51) Int. Cl.: B29B 13/08, B29B 9/16, B29K 27/12

(54) **Verfahren zur Herstellung von Teilen aus pulverförmigen Polyfluorcarbonen**
Method for manufacturing articles from anti-adhesive polyflourcarbon powders
Procédé pour la fabrication d' objets à partir d'une matière polyfluorcarboniqée poudreuse

(30) Priorität: 13.10.1998 DE 19847032
(43) Veröffentlichungstag der Anmeldung: 19.04.2000
(73) Patentinhaber: Kaco GmbH + Co., D-74072 Heilbronn (DE)
(72) Erfinder: Gust, Herbert, 71691 Freiberg (DE)
(74) Vertreter: Kohl, Karl-Heinz

(56) Entgegenhaltungen:
- EP-A- 0 109 334
- EP-A- 0 801 095
- WO-A-96/15851
- WO-A-97/42257
- DE-A- 4 141 805
- DE-A- 19 517 210
- DE-C- 19 612 270
- US-A- 5 234 723
- PATENT ABSTRACTS OF JAPAN vol. 012, no. 252 (C-512), 15. Juli 1988 (1988-07-15) & JP 63 041538 A (SUMITOMO ELECTRIC IND LTD), 22. Februar 1988 (1988-02-22)
- PATENT ABSTRACTS OF JAPAN vol. 008, no. 273 (C-256), 13. Dezember 1984 (1984-12-13) & JP 59 145038 A (KOGYO GIJUTSUIN;OTHERS: 0J), 20. August 1984 (1984-08-20)

## Beschreibung

Die Erfindung betrifft ein Verfahren zur Herstellung von Teilen aus pulverförmigen Polyfluorcarbonen nach dem Oberbegriff des Anspruches 1 bzw. 2.

Als antiadhäsiver organischer Stoff ist Polytetrafluoräthylen bekannt. Es ist ein thermisch und chemisch hochbeständiger Thermoplast mit antiadhäsiven Eigenschaften. Sie verhindern die Möglichkeit, Polytetrafluoräthylen an andere Werkstoffe direkt anzubinden. Deshalb ist bei Polytetrafluoräthylen-Compounds ein fester Verbund zwischen eingelagerten Füllstoffen und der Matrix aus Polytetrafluoräthylen nicht möglich.

In Polytetrafluoräthylen-Faser-Compounds haben die Fasern keine oder nur eine sehr schlechte Haftung aufgrund der antiadhäsiven Eigenschaften des Polytetrafluoräthylens. Durch innere Kerbwirkung im Materialverbund verringern die Fasern die Festigkeit des Werkstoffes sogar deutlich.

Auch bei elastomermodifiziertem Polytetrafluoräthylen (EMP) besteht kein fester Verbund zwischen den eingelagerten Polytetrafluoräthylen-Pulverteilchen und der Elastomermatrix. Dies kann sich besonders bei Zugbeanspruchung und Medieneinwirkung nachteilig auswirken. In diesen Fällen können die Polytetrafluoräthylenteilchen nicht zur Kraftübertragung beitragen, da sie keine Haftung zur Elastomermatrix haben. Die Kräfte können daher nur durch die sehr dünnen Matrixstege aus Elastomerwerkstoff zwischen den Polytetrafluoräthylen-Partikeln übertragen werden. Besonders bei hohen Polytetrafluoräthylen-Füllgraden, das heißt bei etwa 20 bis 50 Massen-% sind die Zwischenbereiche sehr empfindlich und können bei Medieneinwirkung und hoher Temperatur schnell zerstört werden.

Beim gattungsgemäßen Verfahren (JP 63-041538) werden Kunstharz und ein Fluoroharzpulver gemischt. Das Pulver wird einer Niedrigtemperatur-Plasmabehandlung unterworfen, um die Benetzbarkeit des Pulvers zu verbessern. Das aus dem Kunstharz und dem Fluoroharzpulver bestehende Teil weist eine verbesserte Abriebfestigkeit auf und dient als Gleitteil.

Es ist ferner bekannt (DE 196 12 270), Pulverteilchen einer Plasmapolymerisierung zu unterziehen und aus ihnen ein Teil herzustellen, das beschichtet werden kann, beispielsweise mit Klebstoffen, Lacken oder funktionellen Stoffen.

Der Erfindung liegt die Aufgabe zugrunde, das gattungsgemäße Verfahren so auszubilden, daß die antiadhäsive Eigenschaft aufweisenden pulverförmigen Polyfluorcarbone auf einfache und kostengünstige Weise eine feste Verbindung zwischen gleichen Teilen oder mit anderen Werkstoffen ermöglichen.

Diese Aufgabe wird beim gattungsgemäßen Verfahren erfindungsgemäß mit den kennzeichnenden Merkmalen des Anspruches 1 bwz. 2 gelöst.

Die Plasmabehandlung des pulverförmigen Polyfluorcarbone führt zu einer Plasmaätzung und/oder zu chemischen Veränderungen im Mikrobereich an der Oberfläche der Pulverteilchen. Durch diese Mikrostrukturveränderung an der Oberfläche der Pulverteilchen können diese entweder miteinander oder mit der weiteren Komponente zuverlässig fest verbunden werden, ohne daß naßchemische Ätzvorgänge angewandt werden müssen. Bei einem Polytetrafluoräthylen-Faser-Compound beispielsweise werden die Fasern fest haftend in die Polytetrafluoräthylen-Matrix eingebettet, wodurch die Festigkeit solcher fasergefüllter Polytetrafluoräthylen-Compounds deutlich gesteigert wird. Gleichzeitig tritt eine Erhöhung der Werkstoffsteifigkeit auf. Das unerwünschte Kaltfließen und die Kriechneigung des Polytetrafluoräthylens kann auf diese Weise gravierend verringert werden. Auch bei einem elastomermodifizierten Polytetrafluoräthylen (EMP) ergibt sich eine feste Haftung zwischen den Polytetrafluoräthylen-Teilchen und der Elastomermatrix. Aufgrund dieser festen Haftung kann die gesamte Grenzfläche Kräfte aufnehmen. Die Polytetrafluoräthylen-Teilchen tragen zum Kraftfluß bei, so daß das Gesamtmaterial nur wenig empfindlich ist. Unter Pulver sind auch Mikropulver zu verstehen, die in gleicher Weise plasmabehandelt werden können. Die Plasmaaktivierung der Pulver oder Mikropulver in einer Drehtrommel eines entsprechenden Gerätes gewährleistet eine gute Durchmischung des Pulvers während der Plasmabehandlung. Dadurch wird eine optimale Aktivierung der Pulverteilchen gewährleistet. Sie werden nach der Plasmabehandlung zur Herstellung des Teiles gesintert. Aufgrund der Plasmabehandlung werden die Pulverteilchen beim Sintervorgang fest miteinander verbunden, so daß das aus dem Pulver hergestellte Sinterteil eine hohe Festigkeit hat.

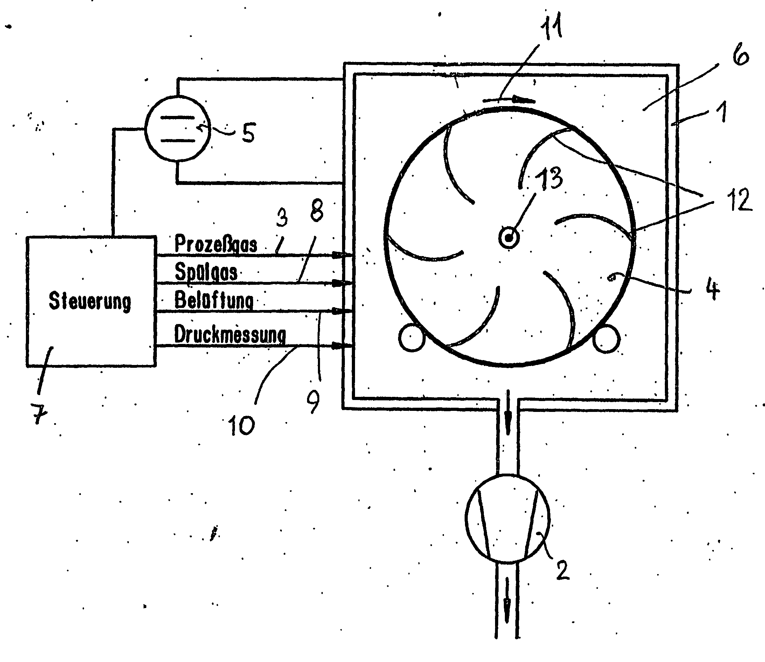

Weiter Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt in schematischer Darstellung ein Gerät zur Plasmabehand-lung von pulverförmigen Polyfluorcarbonen.

Es sind antiadhäsive Polyfluorcarbone, bekannt, die aufgrund ihrer antiadhäsiven Eigenschaften nicht an andere Werkstoffe direkt angebunden werden können. Einer der wichtigsten Vertreter solcher organischer Stoffe ist Polytetrafluorethylen, das auf den verschiedensten Gebieten als Werkstoff eingesetzt wird.

Um diese antiadhäsiven Eigenschaften wesentlich zu verringern bzw. ganz aufzuheben, werden diese pulverförmigen Stoffe vor dem Mischen und/oder Verarbeiten einer Plasmabehandlung unterzogen. Diese Plasmabehandlung führt zu einer Plasmaätzung und/oder zu chemischen Veränderungen im Mikrobereich an der Oberfläche der einzelnen Pulverteilchen. Die auf diese Weise plasmaaktivierte Oberseite der Pulverteilchen ermöglicht, daß die Pulverteilchen zuverlässig fest miteinander verbunden werden können, ohne daß zusätzliche Komponenten oder naßchemische Ätzvorgänge erforderlich sind. Das plasmabehandelte Pulver kann unmittelbar nach der Plasmabehandlung oder nach einer Lagerzeit weiterverarbeitet werden.

Es ist möglich, das plasmabehandelte Pulver ohne Zusatz weiterer Komponenten zu den unterschiedlichsten Bauteilen zu sintern. Aufgrund der Plasmabehandlung werden die Pulverteilchen fest mitein-ander beim Sintervorgang verbunden, so daß das aus dem Pulver hergestellte Sinterteil eine hohe Festigkeit hat.

Die Zeichnung zeigt beispielhaft ein Gerät, in dem das Pulver plasmabehandelt werden kann. Das Gerät hat einen Rezipienten 1, in dem die Plasmabehandlung des Pulvers stattfindet. Im Innenraum des Rezipienten 1 wird mit einer Vakuumpumpe 2 ein Unterdruck erzeugt. Bei einem Druck von etwa 0,1 bis 1 mbar wird ein Prozeßgas über eine Leitung 3 in den Innenraum des Rezipienten 1 eingeleitet. Im Rezipienten befindet sich ein Träger 4 für das Pulver, der als Drehtrommel ausgebildet und um eine horizontale Achse drehbar ist. Mit einem Hochfrequenzgenerator 5, der im Kilo-, im Mega- oder im Gigahertz-Bereich arbeitet, wird das im Aufnahmeraum 6 des Rezipienten 1 befindliche Prozeßgas ionisiert, so daß ein Plasma entsteht. Die Drehtrommel 4 ist an wenigstens einem Ende, vorzugsweise an beiden Enden mit Öffnungen versehen, so daß das Prozeßgas an das in der Drehtrommel 4 befindliche Pulver gelangen kann.

Der Hochfrequenzgenerator 5 ist an eine Steuerung 7 angeschlossen, mit der auch die Zuführung des Prozeßgases über die Leitung 3, die Zuführung eines Spülgases über eine Leitung 8, die Belüftung über eine Leitung 9 und die Druckmessung über eine Leitung 10 gesteuert wird.

Zur Plasmabehandlung des Pulvers wird mittels der Vakuumpumpe 2 Vakuum erzeugt. Sobald das gewünschte Vakuum erreicht ist, wird durch die Steuerung 7 gesteuert über die Leitung 3 das jeweilige Prozeßgas in den Aufnahmeraum 6 des Rezipienten 1 eingeleitet. Zur Erzeugung des Plasmas wird Energie in Form von Hochfrequenz zugeführt, wodurch das Prozeßgas ionisiert wird. Hierzu wird der Hochfrequenzgenerator 5 durch die Steuerung 7 angesteuert,wodurch über Elektroden oder über eine (nicht dargestellte) Antenne die Hochfrequenz in das Prozeßgas eingeleitet wird. Über die Leitung 10 kann der Druck im Aufnahmeraum 6 des Rezipienten 1 durch die Steuerung 7 einfach und zuverlässig erfaßt werden. Über die Leitung 8 kann in den Aufnahmeraum des Rezipienten 1 ein Spülgas eingebracht werden. Nach Beendigung der Plasmabehandlung des Pulvers kann über die Leitung 9 der Innenraum 6 des Rezipienten 1 belüftet werden.

Als Prozeßgase kommen alle in der Plasmatechnik üblichen Gase, wie zum Beispiel Luft, O₂, Ar, N₂, H₂, NH₃ CH₄, CF₄ usw. oder Mischungen dieser Gase in Frage. Besonders gute Ergebnisse werden bei Polyfluorcarbonen mit wasserstoffhaltigen Prozeßgasen erzielt.

Um eine optimale Plasmabehandlung des Pulvers zu gewährleisten, wird die Drehtrommel 4 während der Plasmabehandlung um ihre horizontale Achse in Pfeilrichtung 11 drehbar angetrieben. Um eine gute Durchmischung und damit eine homogene Plasmaaktivierung des Pulvers zu gewährleisten, sind an der Innenwandung der Drehtrommel 4 zum Beispiel nach innen ragende, in Drehrichtung 11 nach hinten gekrümmt verlaufende Schaufeln 12 befestigt, die vorteilhaft über den Innenumfang der Drehtrommel 4 gleichmäßig verteilt vorgesehen sind und mit Abstand von der Drehachse der Drehtrommel 4 enden. Diese Schaufeln 12 bestehen aus Lochblech oder einem Gittermaterial, so daß das Plasma durch die Öffnungen in den Schaufeln 12 an das Pulver gelangen kann. Aufgrund dieser Öffnungen in den Schaufeln 12 wird gleichzeitig auch eine Plasmakonzentration am Pulver erreicht, das damit optimal plasmabehandelt wird.

Die zur Erzeugung des Plasmas notwendige Elektrode 13 kann sich in der Drehachse der Drehtrommel 4 befinden und zum Beispiel ein Stab oder Rohr sein. Es ist auch möglich, die Schaufeln 12 als Elektroden auszubilden, wodurch eine besonders intensive Plasmabehandlung des Pulvers erreicht wird, das auf den Schaufeln 12 unmittelbar aufliegt.

Aufgrund der gekrümmten Schaufeln 12 wird beim Drehen der Trommel 4 eine intensive Vermischung und Durchwirbelung des Pulvers erreicht, so daß sämtliche Pulverteilchen dem Plasma ausgesetzt sind und entsprechend behandelt werden. Darum ist gewährleistet, daß beim nachfolgenden Sintervorgang die plasmabehandelten Pulverteilchen eine feste Verbindung miteinander eingehen

Die gezeigte und beschriebene Ausführungsform des Gerätes zur Behandlung von pulverförmigen Polyfluorcarbonen hat nur beispielhaften Charakter. Möglich sind auch andere Ausführungsformen, bei denen gewährleistet ist, daß das zu behandelnde Pulver gut durchmischt und somit eine mögliche Klumpenbildung des Pulvers vermieden wird, so daß sich eine homogene und ausreichende Aktivierung aller Pulverpartikel ergibt.

Das plasmabehandelte Pulver, das aus einem Polyfluorcarbon, insbesondere aus Polytetrafluorethylen, besteht, kann mit anderen Komponenten gemischt werden. Während beim zuvor beschriebenen Ausführungsbeispiel das plasmabehandelte Pulver ohne jegliche Zusatzstoffe im Sinterverfahren verarbeitet wird, können dem plasmabehandelten Pulver Zusätze beigemischt werden. Es ist aber auch möglich, das plasmabehandelte Pulver lediglich als Füllstoff einem anderen Hauptbestandteil einer Mischung zuzumischen.

Wird als Pulver ein Polyfluorcarbon, insbesondere Polytetrafluorethylen, eingesetzt, dann kann dieses Pulver nach der Plasmabehandlung mit wenigstens einem weiteren Bestandteil zu einem Compound gemischt und verarbeitet werden. Beispielhaft kann ein plasmabehandeltes Polytetrafluorethylen-Pulver mit Fasern, insbesondere Glasfasern, gemischt werden. Nach der Verarbeitung bildet das Polytetrafluorethylen eine Matrix, in welcher die Fasern fest eingeben-tet sind. Aufgrund der Plasmabehandlung des Polytetrafluorethylen-Pulvers ergibt sich eine feste Verbindung zwischen der hieraus hergestellten Matrix und den Fasern. Dadurch haben diese Compounds eine sehr hohe Festigkeit. Gleichzeitig wird dadurch eine Erhöhung der Werkstoffsteifigkeit erzielt. Ein aus diesem Compound hergestelltes Bauteil weist deutlich verringerte Kaltfließeigenschaften auf und neigt auch nur in sehr geringem Maße zum Kriechen.

Die beschriebenen Glasfasern werden mit einer sogenannten Schlichte versehen, die zum Beispiel aus Silanen oder Perfluoräther hergestellt und auf das Polytetrafluorethylen abgestimmt wird. Als Fasern können auch Aramidfasern eingesetzt werden. Nach der Vermischung des plasmabehandelten Pulvers und dieser Fasern wird die Mischung gesintert. Wie schon beim Sintern des reinen, keine Zusätze aufweisenden Pulvers aus dem antiadhäsiven organischen Stoff können durch das Sintern Halbzeuge oder auch Fertigteile hergestellt werden.

Als Füllstoffe für die beschriebenen Compounds kommen beispielsweise auch Graphit oder organische Füllstoffe in Betracht. Die Füllstoffe können beispielhaft in einer Konzentration von etwa 5 bis etwa 50 Gew.-% im Compound vorhanden sein.

Es sind auch elastomermodifizierte Polytetrafluorethylene bekannt, bei denen die Polytetrafluorethylen-Pulverteilchen in eine Elastomermatrix eingelagert sind. Aufgrund der Plasmabehandlung des Polytetrafluorethylen-Pulvers ergibt sich nach der Verarbeitung eine feste Haftung zwischen den Pulverteilchen und der Elastomermatrix. Dadurch kann die gesamte Grenzfläche zwischen den Pulverteilchen und der Elastomermatrix Kräfte aufnehmen. Damit tragen auch die Polytetrafluorethyten-Teilchen zum Kraftfluß bei. DasGesamtmaterial ist darüber hinaus auch bei Zugbeanspruchung wenig empfindlich und kann bei Medieneinwirkung und/oder hoher Temperatur weniger rasch zerstört werden als herkömmliche elastomermodifizierte Polytetrafluorethylene, bei denen das Polytetrafluorethylen nicht einer Plasmabehandlung unterzogen worden ist.

Bei den zuvor beschriebenen Compounds wird das Pulver aus antiadhäsiven Polyfluorcarbonen zuerst plasmabehandelt und dann mit den weiteren Komponenten gemischt. Es ist auch möglich, diese antiadhäsiven Polyfluorcarbone zunächst mit den gewünschten Füllstoffen zu mischen und erst die Mischung der Plasmabehandlung zu unterziehen. Auch in diesen Fällen wird eine feste und innige Verbindung zwischen den antiadhäsiven Polyfluorcarbonen sowie den Füllstoffen erreicht.

Bevorzugt kommt Polytetrafluorethylen in Frage. Mit der beschriebenen Herstellung können hochfeste und kaltfluß- bzw. kriechneigungsminimierte Polytetrafluorethylen-Compounds oder -Teile hergestellt werden. Bei elastomermodifiziertem Polytetrafluorethylen haben die entsprechenden Teilchen in bezug auf Zugbeanspruchung und Medien- bzw. Temperaturbeständigkeit des Werkstoffes im Vergleich zu herkömmlichem elastomermodifiziertem Polytetrafluorethylen deutlich verbesserte Eigenschaften.

Als Polyfluorcarbone können Homopolymere, insbesondere Polytetrafluorethylen, verwendet werden. Als Homopolymere kommen auch Polyvinylidenfluorid, Polyvinylfluorid und dergleichen in Betracht. Als Polyfluorcarbone können aber auch Copolymere eingesetzt werden, wie beispielsweise Polyfluorethylenpropylen, Vinylidenfluorid-Hexafluorpropylen-Copolymerisat, Ethylen-Tetrafluorethylen-Copolymerisat, Perfluoro-Alkoxyalkan-Copolymerisat und dergleichen. Diese Polyfluorcarbone zeichnen sich durch eine hohe chemische Beständigkeit, auch bei erhöhten Temperaturen, aus, sind physiologisch indifferent, nicht entflammbar bzw. flammwidrig und haben ein hervorragendes Gleit- und Ahtihaftverhalten.

Bei entsprechender Plasmaaktivierung ist es auch möglich, so hergestellte Teile aus Polytetrafluorethylen-Compounds oder gesintertem Polytetrafluorethylen direkt ohne weitere Behandlung des Polytetrafluorethylen-Teils, zum Beispiel zu lackieren, zu bedrucken, zu verkleben oder an andere Werkstoffe, zum Beispiel an Kunststoffe im Spritzgießprozeß oder an Elastomere im Vulkanisationsprozeß, fest anzubinden.

Die zur Ionisation des Prozeßgases erforderliche Energie kann alternativ oder zusätzlich auch durch Mikrowellen in den Aufnahmeraum 6 des Rezipienten 1 eingebracht werden. Das Plasmagerät hat dann ein Mikrowellennetzgerät, das sich außerhalb des Rezipienten 1 befindet und an das ein Magnetron angeschlossen ist. In ihm ist eine Antenne eingebaut, die in einen Hohlleiter ragt. Das Magnetron ist ein Elektronenröhrenoszillator, der auf einer festen Frequenz schwingt. Die Antenne des Magnetrons befindet sich nicht im Vakuum des Aufnahmeraumes 6. Gegenüber dem Aufnahmeraum ist das Magnetron mit der Antenne durch ein Glasfenster getrennt, über welches die Mikrowellenstrahlung in den Aufnahmeraum 6 des Rezipienten 1 eingeleitet wird. Das Mikrowellennetzgerät ist vorteilhaft ebenfalls an die Steuerung 7 angeschlossen

## Patentansprüche

1. Verfahren zur Herstellung von Teilen aus pulverförmigen Polyfluorcarbonen, insbesondere PTFE, bei denen das pulverförmige Polyfluorcarbon vor seiner Verarbeitung mit einem Prozessgas plasmabehandelt wird,
**dadurch gekennzeichnet,**
**dass** die Plasmabehandlung bei einem Druck von etwa 0,1 bis 1mbar durchgeführt wird,
**dass** das Polyfluorcarbon mit Fasern zu einem Compound gemischt und verarbeitet wird,
**dass** die Fasern im Compound in einer Konzentration von etwa 5 bis etwa 50 Gew.-% vorhanden sind,
**dass** die Pulverteilchen des Polyfluorcarbons und die Fasern ohne zusätzliche Komponenten unmittelbar miteinander verbunden werden, während das Compound zum Fertigteil verarbeitet wird.

2. Verfahren zur Herstellung von Teilen aus pulverförmigen Polyfluorcarbonen, insbesondere PTFE, bei dem das pulverförmige Polyfluorcarbon vor seiner Verarbeitung mit einem Prozess-gas plasmabehandelt wird,
**dadurch gekennzeichnet,**
**dass** die Plasmabehandlung bei einem Druck von etwa 0,1 bis 1mbar durchgeführt wird,
**dass** das Polyfluorcarbon in wenigstens eine weitere Komponente, die eine Matrix bildet, einge-mischt wird,
**dass** die weitere Komponente ein Elastomer ist,
**dass** die weitere Komponente in einer Konzentration von mehr als 50 Gew.-% vorhanden ist,
und **dass** das Compound aus der weiteren Komponente und dem Polyfluorcarbon zum Ferligteil verarbeitet wird.

3. Verfahren nach Anspruch 1 oder 2,
**dadurch gekennzeichnet, daß** der pulverförmige Stoff während der Plasmabehandlung durchmischt wird.

4. Verfahren nach einem der Ansprüch 1 bis 3, **dadurch gekennzeichnet, daß** das pulverförmige Polyfluorcarbon nach der Plasmabehandlung gesintert wird.

5. Verfahren nach einem der Ansprüche 1 bis 3, **dadurch gekennzeichnet, daß** das pulverförmige Polyfluorcarbon vor der Plasmabehandlung mit der weiteren Komponente gemischt wird.

## Claims

1. A method for producing parts made from powdered polyfluorocarbons, in particular PTFE, in which the powdered polyfluorocarbon is plasma-treated prior to its processing with a process gas,
**characterised in that**
the plasma treatment is carried out at a pressure of about 0.1 to 1 mbar,
the polyfluorocarbon is mixed with fibres to form a compound and is processed,
the fibres are present in the compound in a concentration of about 5 to about 50% by weight,
the powder particles of the polyfluorocarbon and the fibres are joined directly together without additional components,
while the compound is processed to form a finished part.

2. A method for producing parts made from powdered polyfluorocarbons, in particular PTFE, in which the powdered polyfluorocarbon is plasma-treated prior to its processing with a process gas,
**characterised in that**
the plasma treatment is carried out at a pressure of about 0.1 to 1 mbar,
the polyfluorocarbon is mixed into at least one further component, which forms a matrix,
the further component is an elastomer,
the further component is present in the compound in a concentration of more than 50% by weight,
and that the compound of the further component and the polyfluorocarbon is processed to form a finished part.

3. A method according to Claim 1 or 2, **characterised in that** the powdered material is thoroughly mixed during the plasma treatment.

4. A method according to one of Claims 1 to 3, **characterised in that** the powdered polyfluorocarbon is sintered following the plasma treatment.

5. A method according to one of Claims 1 to 3, **characterised in that** the powdered polyfluorocarbon is mixed with the further component prior to the plasma treatment.

## Revendications

1. Procédé de fabrication de pièces à partir de polyfluorocarbones en poudre, en particulier de PTFE, dans lequel le polyfluorocarbone en poudre est soumis avant sa transformation à un traitement au plasma en utilisant un gaz de procédé, **caractérisé en ce que**
le traitement au plasma se fait sous une pression de 0,1 à 1 mbar environ,
le polyfluorocarbone est mélangé à des fibres et transformé en un composite,
les fibres sont présentes dans le composite à une concentration d'environ 5 à environ 50% en poids, et
les particules de poudre de polyfluorocarbone et les fibres sont directement liées les unes aux autres, sans composants supplémentaires, lors de la transformation du composite en pièce finie.

2. Procédé de fabrication de pièces à partir de polyfluorocarbones en poudre, en particulier de PTFE, dans lequel le polyfluorocarbone en poudre est soumis avant sa transformation à un traitement au plasma en utilisant un gaz de procédé, **caractérisé en ce que**
le traitement au plasma se fait sous une pression de 0,1 à 1 mbar environ,
le polyfluorocarbone est incorporé par mélangeage dans au moins un autre composant qui forme une matrice,
l'autre composant est un élastomère,
l'autre composant est présent à une concentration supérieure à 50% en poids, et
le composite constitué de l'autre composant et du polyfluorocarbone est transformé en pièce finie.

3. Procédé selon la revendication 1 ou la revendication 2, **caractérisé en ce que** le matériau en poudre est mélangé intimement pendant le traitement au plasma.

4. Procédé selon l'une des revendications 1 à 3, **caractérisé en ce que** le polyfluorocarbone en poudre est fritté après le traitement au plasma.

5. Procédé selon l'une des revendications 1 à 3, **caractérisé en ce que** le polyfluorocarbone en poudre est mélangé à l'autre composant avant le traitement au plasma.
